# EUROPEAN PATENT SPECIFICATION

(11) **EP 3 625 987 B1**
(45) Date of publication and mention of the grant of the patent: **07.07.2021**
(21) Application number: 19754461.2
(22) Date of filing: 13.02.2019
(51) Int. Cl.: H04W 28/02, H04W 28/24

(54) **METHOD AND APPARATUS FOR MODIFYING MAPPING RULE**
VERFAHREN UND VORRICHTUNG ZUM MODIFIZIEREN VON ABBILDUNGSREGELN
PROCÉDÉ ET APPAREIL DE MODIFICATION D'UNE RÈGLE DE MAPPAGE

(30) Priority: 14.02.2018 US 201862630720 P
(43) Date of publication of application: 25.03.2020
(73) Proprietor: LG Electronics Inc., SEOUL, 07336 (KR)
(72) Inventor: BYUN, Daewook, Seoul 06772 (KR); CHO, Heejeong, Seoul 06772 (KR); XU, Jian, Seoul 06772 (KR); KIM, Seokjung, Seoul 06772 (KR)
(74) Representative: Mooser, Sebastian Thomas
(86) International application number: PCT/KR2019/001726
(87) International publication number: WO 2019/160310

(56) References cited:
- WO-A1-2016/114611
- WO-A1-2018/009340
- US-A1- 2016 338 102
- US-A1- 2017 303 287
- LG ELECTRONICS INC: "Further discussion on RQI", 3GPP DRAFT; R2-1801459 FURTHER DISCUSSION ON RQI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 12 January 2018 (2018-01-12), XP051386867, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- CATT: "How to update the mapping rule of reflective QoS", 3GPP DRAFT; R2-1707938, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317872, Retrieved from the Internet: URL:http://www.3gpp.org/ftp/Meetings_3GPP_ SYNC/RAN2/Docs/ [retrieved on 2017-08-20]
- LG ELECTRONICS INC: "Further discussion on Reflective QoS", 3GPP DRAFT; R2-1709075 FURTHER DISCUSSION ON REFLECTIVE QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318867, Retrieved from the Internet: URL:http://www.3gpp.org/ftp/Meetings_3GPP_ SYNC/RAN2/Docs/ [retrieved on 2017-08-20]
- OPPO: "QoS flow remapping", 3GPP DRAFT; R2-1710353 - QOS FLOW REMAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342400, Retrieved from the Internet: URL:http://www.3gpp.org/ftp/Meetings_3GPP_ SYNC/RAN2/Docs/ [retrieved on 2017-10-08]
- HUAWEI: "SDAP (Re)Configuration", R2-1710227, 3GPP TSG-RAN WG2 #99bis, 8 October 2017 (2017-10-08), XP051342279, Prague, Czech Republic

## Description

### Technical Field

The present invention relates to a wireless communication system, and more particularly, to a method for modifying, by a central unit (CU) of a base station (BS), a QoS flow to DRB mapping rule in a wireless communication system and an apparatus supporting the same.

### Background Art

In order to meet the demand for wireless data traffic, which has been increasing since the commercialization of a fourth-generation (4G) communication system, efforts are being made to develop an improved fifth-generation (5G) communication system or pre-5G communication system. For this reason, a 5G communication system or pre-5G communication system is referred to as a beyond-4G-network communication system or post-long-term evolution (LTE) system.

The document ("Further discussion on RQI", 3GPP DRAFT, R2-1801459, XP051386867) discloses discussion regarding control of mapping of QoS flows to DRB in NAS-dependent situations, and proposes that whether NAS and AS Reflective QoS are triggered is individually indicated to a UE.

The document ("How to update the mapping rule of reflective QoS", 3GPP DRAFT, R2-1707938, XP051317872) discloses features related to updating reflective QoS mapping rules. In the document it is described that a SDAP header is not needed to be saved when a reflective mapping is activated, a RQI bit completely indicates NAS reflective QoS, a gNB does not configure SDAP header for QoS flows indicated by N2 signaling that reflective mapping never applies, and the gNB configures the SDAP header for a QoS flow if N2 signaling does not indicate that the reflective mapping never happens to the QoS flow.

The document ("Further discussion on Reflective QoS", 3GPP DRAFT, R2-1709075, XP051318867) discloses that a gNB marks every DL packet in band with individual indicators that indicate which type(s) of reflective QoS (NAS and AS level reflective QoS) is triggered, and the individual indicators for NA and AS level reflective QoS are provided by a SDAP layer.

The document ("QoS flow remapping", 3GPP DRAFT, R2-1710353, XP051342400) discloses that when QoS flow remapping happens, a transmitter would not transmit via a new DRB until all packets in a buffer is successfully received by a receiver, so as to guarantee in-order delivering of a remapped packet.

### Disclosure of Invention

### Technical Problem

Meanwhile, in 5G NR, separation of gNB-CU-CP and gNB-CU-UP has been discussed. Because the CU-UP hosts the SDAP protocol which supports the function of mapping between a QoS flow and a DRB for both downlink and uplink, it may be possible for the CU-UP to modify the QoS flow to DRB mapping rule based on the current situation e.g. downlink and/or uplink traffic on F1-U and/or NG-U. On the other hand, although the CU-UP hosts the SDAP protocol which supports the function of mapping between a QoS flow and a DRB for both downlink and uplink, it may be possible for the CU-UP to request modifying QoS flow to DRB mapping rule based on the current situation to the CU-CP. It is because that the CU-CP may make QoS flow to DRB mapping rule and the CU-UP performs the mapping between QoS flow and DRB. However, the QoS flow to DRB re-mapping hosted by the CU-UP or the CU-CP is not supported in separation of CU-CP and CU-UP, currently. Thus, a procedure for QoS flow to DRB re-mapping needs to be suggested in separation scenario of gNB-CU-CP and gNB-CU-UP.

Further, there may be reflective QoS flow to DRB mapping among the QoS flow to DRB mapping. Unlike the QoS flow to DRB re-mapping case, it is not needed to provide the UE (via the CU-CP in case the CU-UP offers QoS flow to DRB mapping rule) with the reflective QoS flow to DRB re-mapping. It is because that the SDAP in the CU-UP sends the downlink data with RQI set to 1 or with RDI set to 1 to the UE through the re-mapped DRB. When to receive this data, the UE stores the QoS flow to DRB mapping as the QoS flow to DRB mapping rule for the uplink. Therefore, the QoS flow to DRB re-mapping solution hosted by the CU-UP or the CU-CP, considering reflective QoS flow to DRB mapping, is necessary.

### Solution to Problem

Preferred embodiments of the present disclosure are provided as defined in the appended claims. One example provides a method for modifying, by a central unit (CU) of a base station (BS), a QoS flow to DRB mapping rule in a wireless communication system. The method may include: modifying the QoS flow to DRB mapping rule; determining whether or not the modified QoS flow to DRB mapping rule is related to reflective mapping; and when it is determined that the modified QoS flow to DRB mapping rule is not related to the reflective mapping, transmitting the modified QoS flow to DRB mapping rule to a user equipment (UE).

Another example provides a central unit (CU) of a base station (BS) for modifying a QoS flow to DRB mapping rule in a wireless communication system. The CU of may include: a transceiver; at least one processor; and at least one computer memory operably connectable to the at least one processor and storing instructions that, when executed, cause the at least one processor to perform operations comprising: modifying the QoS flow to DRB mapping rule; determining whether or not the modified QoS flow to DRB mapping rule is related to reflective mapping; and when it is determined that the modified QoS flow to DRB mapping rule is not related to the reflective mapping, transmitting the modified QoS flow to DRB mapping rule to a user equipment (UE).

Another example provides a method for receiving, by a user equipment (UE), a modified QoS flow to DRB mapping rule in a wireless communication system. The method may include: receiving the modified QoS flow to DRB mapping rule from a central unit (CU) of a base station (BS), wherein the modified QoS flow to DRB mapping rule is not related to reflective mapping.

### Advantageous Effects of Invention

A user experience can be improved and a RAN node can handle the data packets better for a specific UE.

### Brief Description of Drawings

FIG. 1 shows an example of a wireless communication system to which technical features of the present invention may be applied.
FIG. 2 shows another example of a wireless communication system to which technical features of the present invention may be applied.
FIG. 3 shows a block diagram of a user plane protocol stack to which technical features of the present invention may be applied.
FIG. 4 shows a block diagram of a control plane protocol stack to which technical features of the present invention may be applied.
FIG. 5 shows functional split between NG-RAN and 5GC to which technical features of the present invention may be applied.
FIG. 6 shows overall architecture of NG-RAN to which technical features of the present invention may be applied.
FIG. 7 shows overall architecture for separation of gNB-CU-CP and gNB-CU-UP to which technical features of the present invention may be applied.
FIG. 8 shows mapping between a QoS flow and a DRBto which technical features of the present invention may be applied.
FIG. 9 shows a procedure for modifying a QoS flow to DRB mapping rule in a CP-UP separation case according to an embodiment of the present invention.
FIGs. 10a and 10b show a procedure for modifying a QoS flow to DRB mapping rule in a CP-UP separation case according to an embodiment of the present invention.
FIG. 11 shows a procedure for modifying a QoS flow to DRB mapping rule in a CP-UP separation case according to an embodiment of the present invention.
FIG. 12 shows a method for modifying a QoS flow to DRB mapping rule by a central unit (CU) of a base station (BS) according to an embodiment of the present invention.
FIG. 13 shows a BS to implement an embodiment of the present invention.
FIG. 14 shows a method for receiving a modified QoS flow to DRB mapping rule by a UE according to an embodiment of the present invention.
FIG. 15 shows a UE to implement an embodiment of the present invention.

### Mode for the Invention

In this document, the term "/" and ?," should be interpreted to indicate "and/or." For instance, the expression "A/B" may mean "A and/or B." Further, "A, B" may mean "A and/or B." Further, "A/B/C" may mean "at least one of A, B, and/or C." Also, "A, B, C" may mean "at least one of A, B, and/or C."

Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

The technical features described below may be used by a communication standard by the 3rd generation partnership project (3GPP) standardization organization, a communication standard by the institute of electrical and electronics engineers (IEEE), etc. For example, the communication standards by the 3GPP standardization organization include long-term evolution (LTE) and/or evolution of LTE systems. The evolution of LTE systems includes LTE-advanced (LTE-A), LTE-A Pro, and/or 5G new radio (NR). The communication standard by the IEEE standardization organization includes a wireless local area network (WLAN) system such as IEEE 802.11a/b/g/n/ac/ax. The above system uses various multiple access technologies such as orthogonal frequency division multiple access (OFDMA) and/or single carrier frequency division multiple access (SC-FDMA) for downlink (DL) and/or uplink (DL). For example, only OFDMA may be used for DL and only SC-FDMA may be used for UL. Alternatively, OFDMA and SC-FDMA may be used for DL and/or UL.

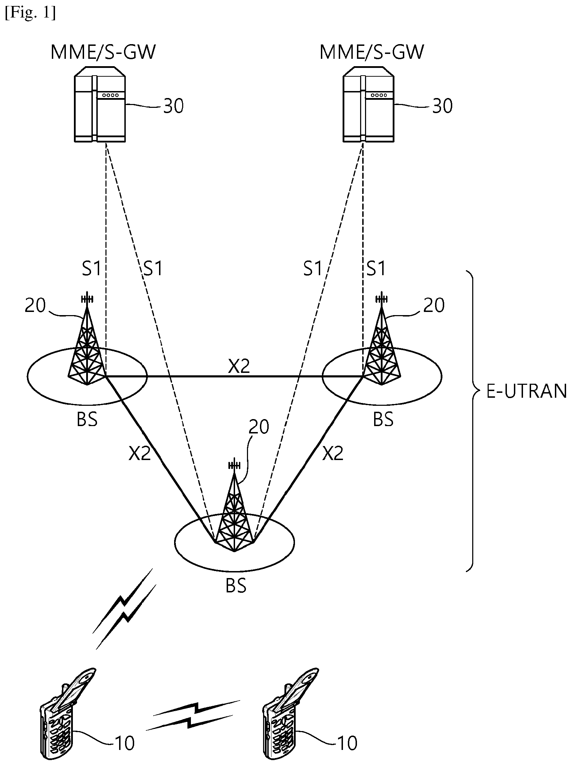

FIG. 1 shows an example of a wireless communication system to which technical features of the present invention may be applied. Specifically, FIG. 1 shows a system architecture based on an evolved-UMTS terrestrial radio access network (E-UTRAN). The aforementioned LTE is a part of an evolved-UTMS (e-UMTS) using the E-UTRAN.

Referring to FIG. 1, the wireless communication system includes one or more user equipment (UE; 10), an E-UTRAN and an evolved packet core (EPC). The UE 10 refers to a communication equipment carried by a user. The UE 10 may be fixed or mobile. The UE 10 may be referred to as another terminology, such as a mobile station (MS), a user terminal (UT), a subscriber station (SS), a wireless device, etc.

The E-UTRAN consists of one or more base station (BS) 20. The BS 20 provides the E-UTRA user plane and control plane protocol terminations towards the UE 10. The BS 20 is generally a fixed station that communicates with the UE 10. The BS 20 hosts the functions, such as inter-cell radio resource management (RRM), radio bearer (RB) control, connection mobility control, radio admission control, measurement configuration/provision, dynamic resource allocation (scheduler), etc. The BS may be referred to as another terminology, such as an evolved NodeB (eNB), a base transceiver system (BTS), an access point (AP), etc.

A downlink (DL) denotes communication from the BS 20 to the UE 10. An uplink (UL) denotes communication from the UE 10 to the BS 20. A sidelink (SL) denotes communication between the UEs 10. In the DL, a transmitter may be a part of the BS 20, and a receiver may be a part of the UE 10. In the UL, the transmitter may be a part of the UE 10, and the receiver may be a part of the BS 20. In the SL, the transmitter and receiver may be a part of the UE 10.

The EPC includes a mobility management entity (MME), a serving gateway (S-GW) and a packet data network (PDN) gateway (P-GW). The MME hosts the functions, such as non-access stratum (NAS) security, idle state mobility handling, evolved packet system (EPS) bearer control, etc. The S-GW hosts the functions, such as mobility anchoring, etc. The S-GW is a gateway having an E-UTRAN as an endpoint. For convenience, MME/S-GW 30 will be referred to herein simply as a "gateway," but it is understood that this entity includes both the MME and S-GW. The P-GW hosts the functions, such as UE Internet protocol (IP) address allocation, packet filtering, etc. The P-GW is a gateway having a PDN as an endpoint. The P-GW is connected to an external network.

The UE 10 is connected to the BS 20 by means of the Uu interface. The UEs 10 are interconnected with each other by means of the PC5 interface. The BSs 20 are interconnected with each other by means of the X2 interface. The BSs 20 are also connected by means of the S1 interface to the EPC, more specifically to the MME by means of the S1-MME interface and to the S-GW by means of the S1-U interface. The S1 interface supports a many-to-many relation between MMEs / S-GWs and BSs.

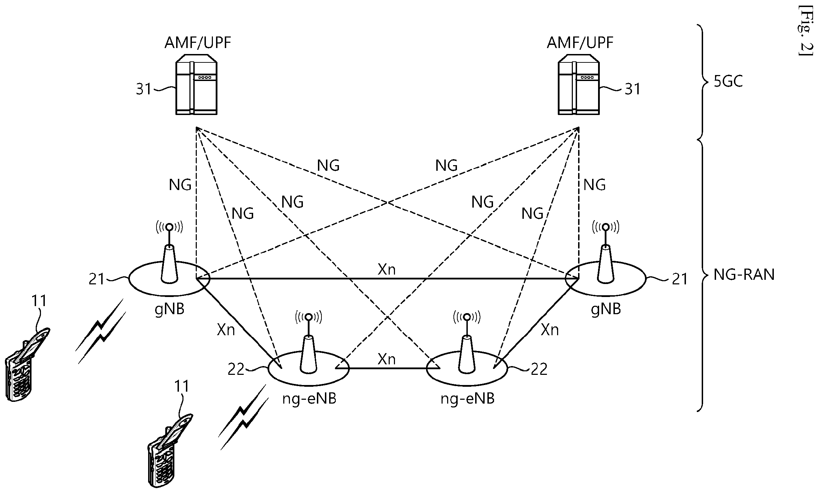

FIG. 2 shows another example of a wireless communication system to which technical features of the present invention may be applied. Specifically, FIG. 2 shows a system architecture based on a 5G new radio access technology (NR) system. The entity used in the 5G NR system (hereinafter, simply referred to as "NR") may absorb some or all of the functions of the entities introduced in FIG. 1 (e.g. eNB, MME, S-GW). The entity used in the NR system may be identified by the name "NG" for distinction from the LTE/LTE-A.

Referring to FIG. 2, the wireless communication system includes one or more UE 11, a next-generation RAN (NG-RAN) and a 5th generation core network (5GC). The NG-RAN consists of at least one NG-RAN node. The NG-RAN node is an entity corresponding to the BS 10 shown in FIG. 1. The NG-RAN node consists of at least one gNB 21 and/or at least one ng-eNB 22. The gNB 21 provides NR user plane and control plane protocol terminations towards the UE 11. The ng-eNB 22 provides E-UTRA user plane and control plane protocol terminations towards the UE 11.

The 5GC includes an access and mobility management function (AMF), a user plane function (UPF) and a session management function (SMF). The AMF hosts the functions, such as NAS security, idle state mobility handling, etc. The AMF is an entity including the functions of the conventional MME. The UPF hosts the functions, such as mobility anchoring, protocol data unit (PDU) handling. The UPF an entity including the functions of the conventional S-GW. The SMF hosts the functions, such as UE IP address allocation, PDU session control.

The gNBs and ng-eNBs are interconnected with each other by means of the Xn interface. The gNBs and ng-eNBs are also connected by means of the NG interfaces to the 5GC, more specifically to the AMF by means of the NG-C interface and to the UPF by means of the NG-U interface.

A protocol structure between network entities described above is described. On the system of FIG. 1 and/or FIG. 2, layers of a radio interface protocol between the UE and the network (e.g. NG-RAN and/or E-UTRAN) may be classified into a first layer (L1), a second layer (L2), and a third layer (L3) based on the lower three layers of the open system interconnection (OSI) model that is well-known in the communication system.

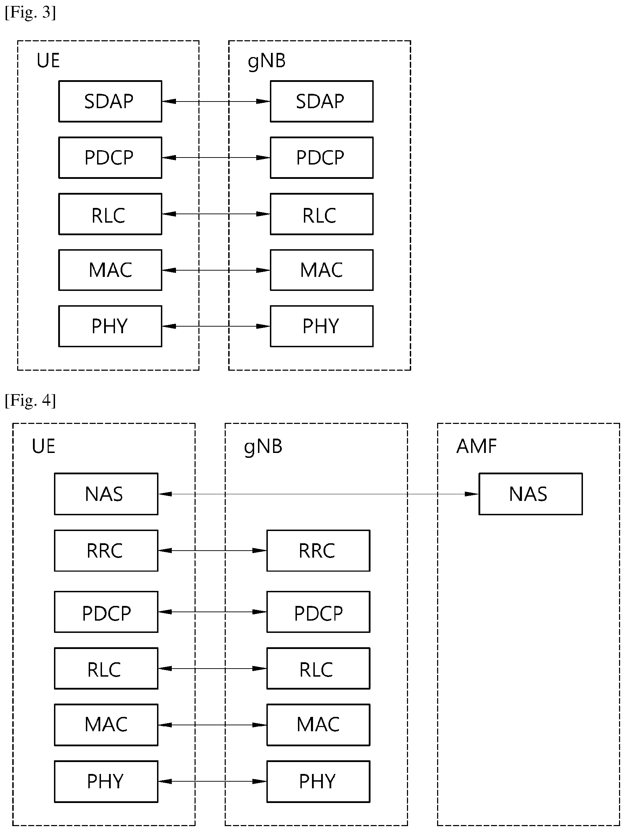

FIG. 3 shows a block diagram of a user plane protocol stack to which technical features of the present invention may be applied. FIG. 4 shows a block diagram of a control plane protocol stack to which technical features of the present invention may be applied. The user/control plane protocol stacks shown in FIG. 3 and FIG. 4 are used in NR. However, user/control plane protocol stacks shown in FIG. 3 and FIG .4 may be used in LTE/LTE-A without loss of generality, by replacing gNB/AMF with eNB/ MME.

Referring to FIG. 3 and FIG. 4, a physical (PHY) layer belonging to L1. The PHY layer offers information transfer services to media access control (MAC) sublayer and higher layers. The PHY layer offers to the MAC sublayer transport channels. Data between the MAC sublayer and the PHY layer is transferred via the transport channels. Between different PHY layers, i.e., between a PHY layer of a transmission side and a PHY layer of a reception side, data is transferred via the physical channels.

The MAC sublayer belongs to L2. The main services and functions of the MAC sublayer include mapping between logical channels and transport channels, multiplexing/de-multiplexing of MAC service data units (SDUs) belonging to one or different logical channels into/from transport blocks (TB) delivered to/from the physical layer on transport channels, scheduling information reporting, error correction through hybrid automatic repeat request (HARQ), priority handling between UEs by means of dynamic scheduling, priority handling between logical channels of one UE by means of logical channel prioritization (LCP), etc. The MAC sublayer offers to the radio link control (RLC) sublayer logical channels.

The RLC sublayer belong to L2. The RLC sublayer supports three transmission modes, i.e. transparent mode (TM), unacknowledged mode (UM), and acknowledged mode (AM), in order to guarantee various quality of services (QoS) required by radio bearers. The main services and functions of the RLC sublayer depend on the transmission mode. For example, the RLC sublayer provides transfer of upper layer PDUs for all three modes, but provides error correction through ARQ for AM only. In LTE/LTE-A, the RLC sublayer provides concatenation, segmentation and reassembly of RLC SDUs (only for UM and AM data transfer) and re-segmentation of RLC data PDUs (only for AM data transfer). In NR, the RLC sublayer provides segmentation (only for AM and UM) and re-segmentation (only for AM) of RLC SDUs and reassembly of SDU (only for AM and UM). That is, the NR does not support concatenation of RLC SDUs. The RLC sublayer offers to the packet data convergence protocol (PDCP) sublayer RLC channels.

The PDCP sublayer belong to L2. The main services and functions of the PDCP sublayer for the user plane include header compression and decompression, transfer of user data, duplicate detection, PDCP PDU routing, retransmission of PDCP SDUs, ciphering and deciphering, etc. The main services and functions of the PDCP sublayer for the control plane include ciphering and integrity protection, transfer of control plane data, etc.

The service data adaptation protocol (SDAP) sublayer belong to L2. The SDAP sublayer is only defined in the user plane. The SDAP sublayer is only defined for NR. The main services and functions of SDAP include, mapping between a QoS flow and a data radio bearer (DRB), and marking QoS flow ID (QFI) in both DL and UL packets. The SDAP sublayer offers to 5GC QoS flows.

A radio resource control (RRC) layer belongs to L3. The RRC layer is only defined in the control plane. The RRC layer controls radio resources between the UE and the network. To this end, the RRC layer exchanges RRC messages between the UE and the BS. The main services and functions of the RRC layer include broadcast of system information related to AS and NAS, paging, establishment, maintenance and release of an RRC connection between the UE and the network, security functions including key management, establishment, configuration, maintenance and release of radio bearers, mobility functions, QoS management functions, UE measurement reporting and control of the reporting, NAS message transfer to/from NAS from/to UE.

In other words, the RRC layer controls logical channels, transport channels, and physical channels in relation to the configuration, reconfiguration, and release of radio bearers. A radio bearer refers to a logical path provided by L1 (PHY layer) and L2 (MAC/RLC/PDCP/SDAP sublayer) for data transmission between a UE and a network. Setting the radio bearer means defining the characteristics of the radio protocol layer and the channel for providing a specific service, and setting each specific parameter and operation method. Radio bearer may be divided into signaling RB (SRB) and data RB (DRB). The SRB is used as a path for transmitting RRC messages in the control plane, and the DRB is used as a path for transmitting user data in the user plane.

An RRC state indicates whether an RRC layer of the UE is logically connected to an RRC layer of the E-UTRAN. In LTE/LTE-A, when the RRC connection is established between the RRC layer of the UE and the RRC layer of the E-UTRAN, the UE is in the RRC connected state (RRC_CONNECTED). Otherwise, the UE is in the RRC idle state (RRC_IDLE). In NR, the RRC inactive state (RRC_INACTIVE) is additionally introduced. RRC_INACTIVE may be used for various purposes. For example, the massive machine type communications (MMTC) UEs can be efficiently managed in RRC_INACTIVE. When a specific condition is satisfied, transition is made from one of the above three states to the other.

A predetermined operation may be performed according to the RRC state. In RRC_IDLE, public land mobile network (PLMN) selection, broadcast of system information (SI), cell re-selection mobility, core network (CN) paging and discontinuous reception (DRX) configured by NAS may be performed. The UE shall have been allocated an identifier (ID) which uniquely identifies the UE in a tracking area. No RRC context stored in the base station.

In RRC_CONNECTED, the UE has an RRC connection with the network (i.e. E-UTRAN/NG-RAN). Network-CN connection (both C/U-planes) is also established for UE. The UE AS context is stored in the network and the UE. The RAN knows the cell which the UE belongs to. The network can transmit and/or receive data to/from UE. Network controlled mobility including measurement is also performed.

Most of operations performed in RRC_IDLE may be performed in RRC_INACTIVE. But, instead of CN paging in RRC_IDLE, RAN paging is performed in RRC_INACTIVE. In other words, in RRC_IDLE, paging for mobile terminated (MT) data is initiated by core network and paging area is managed by core network. In RRC_INACTIVE, paging is initiated by NG-RAN, and RAN-based notification area (RNA) is managed by NG-RAN. Further, instead of DRX for CN paging configured by NAS in RRC_IDLE, DRX for RAN paging is configured by NG-RAN in RRC_INACTIVE. Meanwhile, in RRC_INACTIVE, 5GC-NG-RAN connection (both C/U-planes) is established for UE, and the UE AS context is stored in NG-RAN and the UE. NG-RAN knows the RNA which the UE belongs to.

NAS layer is located at the top of the RRC layer. The NAS control protocol performs the functions, such as authentication, mobility management, security control.

The physical channels may be modulated according to OFDM processing and utilizes time and frequency as radio resources. The physical channels consist of a plurality of orthogonal frequency division multiplexing (OFDM) symbols in time domain and a plurality of subcarriers in frequency domain. One subframe consists of a plurality of OFDM symbols in the time domain. A resource block is a resource allocation unit, and consists of a plurality of OFDM symbols and a plurality of subcarriers. In addition, each subframe may use specific subcarriers of specific OFDM symbols (e.g. first OFDM symbol) of the corresponding subframe for a physical downlink control channel (PDCCH), i.e. L1/L2 control channel. A transmission time interval (TTI) is a basic unit of time used by a scheduler for resource allocation. The TTI may be defined in units of one or a plurality of slots, or may be defined in units of mini-slots.

The transport channels are classified according to how and with what characteristics data are transferred over the radio interface. DL transport channels include a broadcast channel (BCH) used for transmitting system information, a downlink shared channel (DL-SCH) used for transmitting user traffic or control signals, and a paging channel (PCH) used for paging a UE. UL transport channels include an uplink shared channel (UL-SCH) for transmitting user traffic or control signals and a random access channel (RACH) normally used for initial access to a cell.

Different kinds of data transfer services are offered by MAC sublayer. Each logical channel type is defined by what type of information is transferred. Logical channels are classified into two groups: control channels and traffic channels.

Control channels are used for the transfer of control plane information only. The control channels include a broadcast control channel (BCCH), a paging control channel (PCCH), a common control channel (CCCH) and a dedicated control channel (DCCH). The BCCH is a DL channel for broadcasting system control information. The PCCH is DL channel that transfers paging information, system information change notifications. The CCCH is a channel for transmitting control information between UEs and network. This channel is used for UEs having no RRC connection with the network. The DCCH is a point-to-point bi-directional channel that transmits dedicated control information between a UE and the network. This channel is used by UEs having an RRC connection.

Traffic channels are used for the transfer of user plane information only. The traffic channels include a dedicated traffic channel (DTCH). The DTCH is a point-to-point channel, dedicated to one UE, for the transfer of user information. The DTCH can exist in both UL and DL.

Regarding mapping between the logical channels and transport channels, in DL, BCCH can be mapped to BCH, BCCH can be mapped to DL-SCH, PCCH can be mapped to PCH, CCCH can be mapped to DL-SCH, DCCH can be mapped to DL-SCH, and DTCH can be mapped to DL-SCH. In UL, CCCH can be mapped to UL-SCH, DCCH can be mapped to UL- SCH, and DTCH can be mapped to UL-SCH.

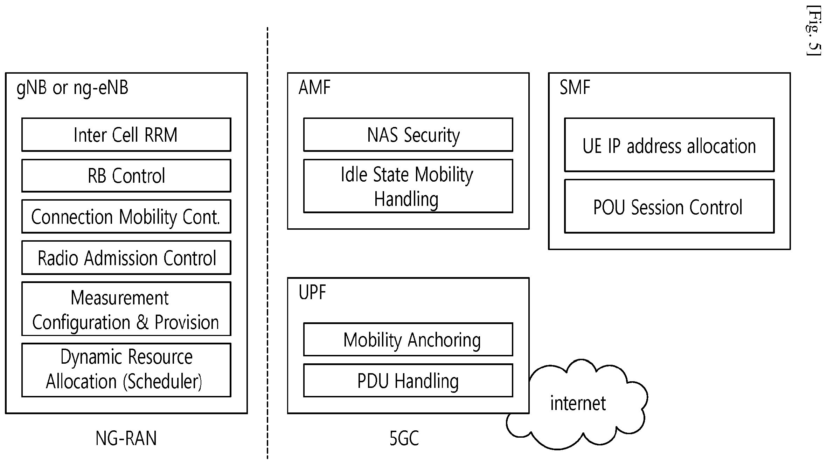

FIG. 5 shows functional split between NG-RAN and 5GC to which technical features of the present invention may be applied.

Referring to FIG. 5, the gNB and ng-eNB may host the following functions:
- Functions for Radio Resource Management: Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or O&M);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) may host the following main functions:
- NAS signalling termination;
- NAS signalling security;
- AS Security control;
- Inter CN node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- SMF selection.

The User Plane Function (UPF) may host the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

The Session Management function (SMF) may host the following main functions:
- Session Management;
- UE IP address allocation and management;
- Selection and control of UP function;
- Configures traffic steering at UPF to route traffic to proper destination;
- Control part of policy enforcement and QoS;
- Downlink Data Notification.

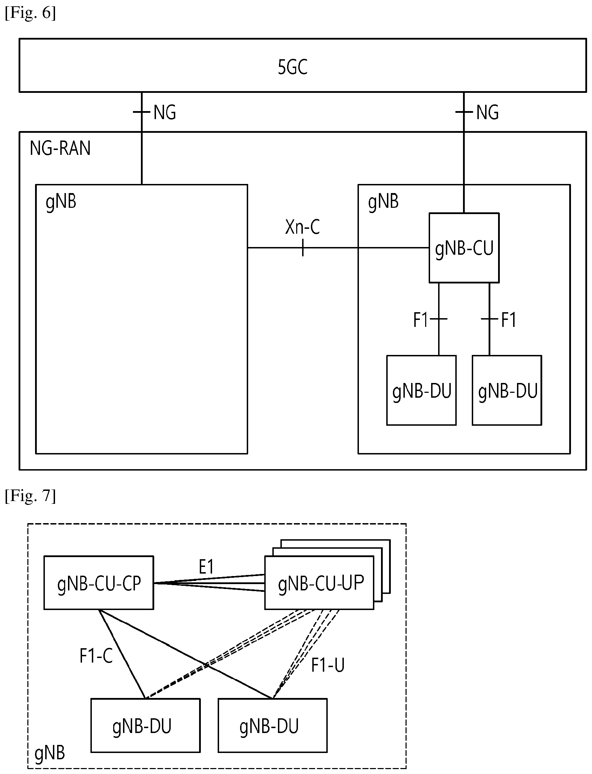

FIG. 6 shows overall architecture of NG-RAN to which technical features of the present invention may be applied.

Referring to FIG. 6, the NG-RAN may include a set of gNBs connected to the 5GC through the NG interface. A gNB can support FDD mode, TDD mode or dual mode operation. gNBs can be interconnected through the Xn interface. A gNB may include a gNB central unit (gNB-CU) and at least one gNB distributed unit (gNB-DU). A gNB-CU may be a logical node hosting RRC, SDAP and PDCP protocols of the gNB or RRC and PDCP protocols of the ng-eNB that controls the operation of one or more gNB-DUs. The gNB-CU may terminate the F1 interface connected with the gNB-DU. A gNB-DU may be a logical node hosting RLC, MAC and PHY layers of the gNB or ng-eNB, and its operation is partly controlled by gNB-CU. One gNB-DU may support one or multiple cells. One cell may be supported by only one gNB-DU. The gNB-DU may terminate the F1 interface connected with the gNB-CU. One gNB-DU is connected to only one gNB-CU. For resiliency, a gNB-DU may be connected to multiple gNB-CUs by appropriate implementation. NG, Xn and F1 are logical interfaces.

FIG. 7 shows overall architecture for separation of gNB-CU-CP and gNB-CU-UP to which technical features of the present invention may be applied.

Referring to FIG. 7, a gNB may include a gNB-CU-control plane (gNB-CU-CP), multiple gNB-CU-user planes (gNB-CU-UPs) and multiple gNB-DUs. A gNB-CU-CP may be a logical node hosting the RRC and the control plane part of the PDCP protocol of the gNB-CU for an ng-eNB or a gNB. The gNB-CU-CP may terminate the E1 interface connected with the gNB-CU-UP and the F1-C interface connected with the gNB-DU. A gNB-CU-UP may be a logical node hosting the user plane part of the PDCP protocol of the gNB-CU for an ng-eNB and the user plane part of the PDCP protocol and the SDAP protocol of the gNB-CU for a gNB. The gNB-CU-UP may terminate the E1 interface connected with the gNB-CU-CP and the F1-U interface connected with the gNB-DU.

The gNB-CU-CP may be connected to the gNB-DU through the F1-C interface. The gNB-CU-UP may be connected to the gNB-DU through the F1-U interface. The gNB-CU-UP may be connected to the gNB-CU-CP through the E1 interface. One gNB-DU may be connected to only one gNB-CU-CP. One gNB-CU-UP may be connected to only one gNB-CU-CP. For resiliency, a gNB-DU and/or a gNB-CU-UP may be connected to multiple gNB-CU-CPs by appropriate implementation. One gNB-DU may be connected to multiple gNB-CU-UPs under the control of the same gNB-CU-CP. One gNB-CU-UP may be connected to multiple DUs under the control of the same gNB-CU-CP. The connectivity between a gNB-CU-UP and a gNB-DU may be established by the gNB-CU-CP using bearer context management functions. The gNB-CU-CP may select the appropriate gNB-CU-UP(s) for the requested services for the UE. In case of multiple CU-UP(s), they may belong to same security domain. Data forwarding between gNB-CU-UPs during intra-gNB-CU-CP handover within a gNB may be supported by Xn-U.

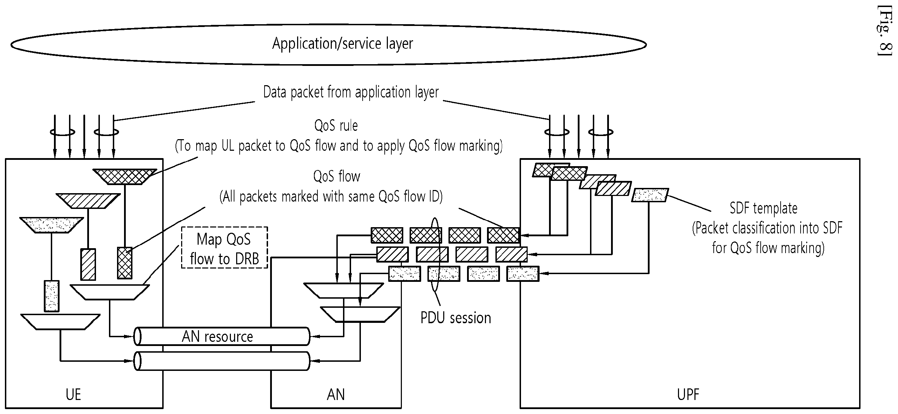

FIG. 8 shows mapping between a QoS flow and a DRB to which technical features of the present invention may be applied.

In an uplink, a BS may control mapping of a QoS flow to a DRB using either reflective mapping or explicit configuration. In reflective mapping, for each DRB, a UE may monitor QoS flow ID(s) of a downlink packet and may apply the same mapping in an uplink. That is, for a DRB, the UE may map the uplink packets belonging to the QoS flows(s) corresponding to the QoS flow ID(s) and PDU session observed in the downlink packets for that DRB. To enable reflective mapping, the BS may mark the downlink packet via a Uu with the QoS flow ID. In explicit configuration, however, the BS may configure QoS flow-to-DRB mapping. That is, QoS flow to DRB mapping rules can be explicitly signaled by RRC.

A reflective QoS flow to DRB mapping indication (RDI) may be defined for indicating whether QoS flow to DRB mapping rule should be updated. For instance, The RDI may be defined as Table 1.

**[Table 1]**

| **Bit** | **Description** |
|---|---|
| 0 | No action |
| 1 | To store QoS flow to DRB mapping rule. |

As explained above, in 5G NR, separation of gNB-CU-CP and gNB-CU-UP has been discussed. Because the CU-UP hosts the SDAP protocol which supports the function of mapping between a QoS flow and a DRB for both downlink and uplink, it may be possible for the CU-UP to modify the QoS flow to DRB mapping rule based on the current situation e.g. downlink and/or uplink traffic on F1-U and/or NG-U. On the other hand, although the CU-UP hosts the SDAP protocol which supports the function
of mapping between a QoS flow and a DRB for both downlink and uplink, it may be possible for the CU-UP to request modifying QoS flow to DRB mapping rule based on the current situation to the CU-CP. It is because that the CU-CP may make QoS flow to DRB mapping rule and the CU-UP performs the mapping between QoS flow and DRB. However, the QoS flow to DRB re-mapping hosted by the CU-UP or the CU-CP is not supported in separation of CU-CP and CU-UP, currently. Thus, a procedure for QoS flow to DRB re-mapping needs to be suggested in separation scenario of gNB-CU-CP and gNB-CU-UP.

Further, as explained above, there may be reflective QoS flow to DRB mapping among the QoS flow to DRB mapping. The reflective QoS flow to DRB mapping may be referred to as reflective mapping. Unlike the QoS flow to DRB re-mapping case, it is not needed to provide the UE (via the CU-CP in case the CU-UP offers QoS flow to DRB mapping rule) with the reflective QoS flow to DRB re-mapping. It is because that the SDAP in the CU-UP sends the downlink data with RQI set to 1 or with RDI set to 1 to the UE through the re-mapped DRB. When to receive this data, the UE stores the QoS flow to DRB mapping as the QoS flow to DRB mapping rule for the uplink. Therefore, the QoS flow to DRB re-mapping solution hosted by the CU-UP or the CU-CP, considering reflective QoS flow to DRB mapping, is necessary.

Hereinafter, a method for modifying a QoS flow to DRB mapping rule in separation of the CU-CP and the CU-UP and an apparatus supporting the same will be described according to an embodiment of the present invention. In the specification, a QoS flow to DRB mapping rule may be referred to as a mapping rule.

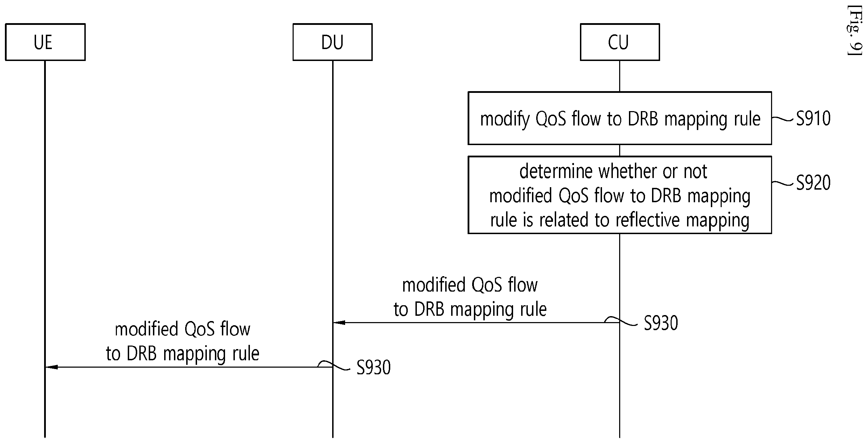

FIG. 9 shows a procedure for modifying a QoS flow to DRB mapping rule in a CP-UP separation case according to an embodiment of the present invention.

Referring to FIG. 9, in step S910, the CU may decide to modify a QoS flow to DRB mapping rule for one or more DRBs or QoS flows established based on a current situation. For instance, the CU may decide to modify a QoS flow to DRB mapping rule based on downlink traffic and/or uplink traffic on F1-U and/or NG-U. Then, the CU may modify a QoS flow to DRB mapping rule for one or more DRBs or QoS flows. For instance, the QoS flow to DRB mapping rule for one or more DRBs or QoS flows may be modified by the CU-CP. Alternatively, the QoS flow to DRB mapping rule for one or more DRBs or QoS flows may be modified by the CU-UP.

In step S920, the CU may determine whether or not the modified QoS flow to DRB mapping rule is related to reflective mapping.

In step S930, if the CU determines that the modified QoS flow to DRB mapping rule is not related to reflective mapping, the CU transmits the modified QoS flow to DRB mapping rule to a UE. The modified QoS flow to DRB mapping rule may be transmitted to the UE via the DU. For instance, the modified QoS flow to DRB mapping rule may be transmitted from the CU to the DU by being included in a DL RRC message transfer message, and transmitted from the DU to the UE by being included in a RRC reconfiguration message. On the other hand, if the CU determines that the modified QoS flow to DRB mapping rule is related to reflective mapping, the CU does not transmit the modified QoS flow to DRB mapping rule to a UE.

According to an embodiment of the present invention, the CU can modify a QoS flow to DRB mapping rule for one or more DRBs or QoS flows established based on a current situation, such as current downlink and/or uplink traffic situation. Also, the CU can transmit the modified QoS flow to DRB mapping rule to the UE only when the modified QoS flow to DRB mapping rule is not related to reflective mapping. Thus, a user experience can be improved and a RAN node can handle the data packets better for a specific UE.

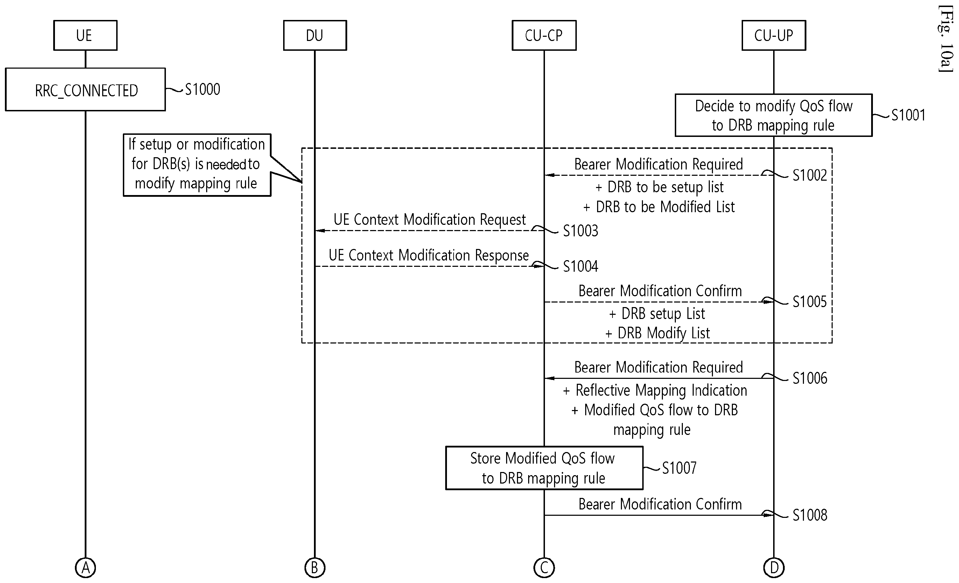

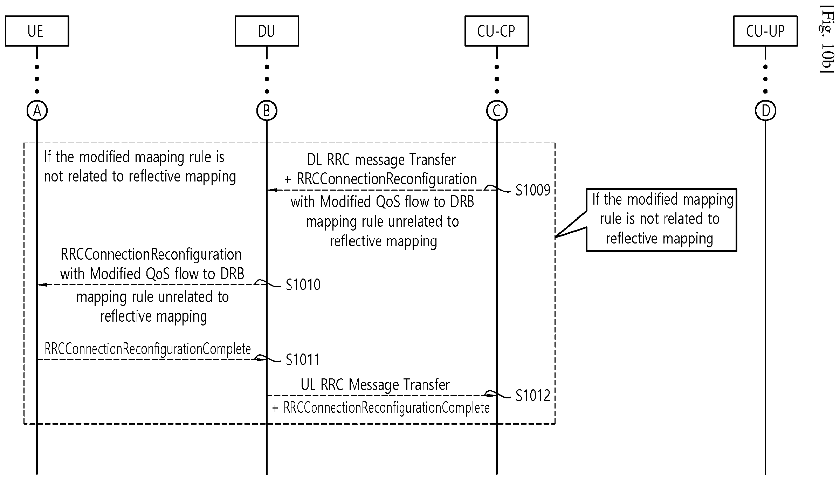

FIGs. 10a and 10b show a procedure for modifying a QoS flow to DRB mapping rule in a CP-UP separation case according to an embodiment of the present invention.

A control plane part of the gNB-CU may be referred to as CU-CP, and a user plane part of the gNB-CU may be referred to as CU-UP. The gNB-DU may be referred to as DU.

Referring to FIG. 10a, in step S1000, the UE may be in RRC_CONNECTED mode.

In step S1001, the CU-UP may decide to modify a QoS flow to DRB mapping rule for one or more DRBs or QoS flows established based on a current situation. For instance, the CU-UP may decide to modify a QoS flow to DRB mapping rule based on downlink traffic and/or uplink traffic on F1-U and/or NG-U.

In step S1002, if setup for at least one DRB is needed to modify the mapping rule, the CU-UP may send a bearer modification required message, an existing message or a new message to the CU-CP. Alternatively, if L1/L2 reconfiguration for established DRB(s) is needed to modify mapping rule, the CU-UP may send a bearer modification required message, an existing message or a new message to the CU-CP. Alternatively, if L1/L2 reconfiguration for established DRB(s) and setup for at least one DRB are needed to modify mapping rule, the CU-UP may send a bearer modification required message, an existing message or a new message to the CU-CP. The bearer modification required message may include a DRB to be Setup List and/or a DRB to be Modified List which has the QoS Flow Indicator and/or the QoS Flow Level QoS Parameters. The DRB to be Setup List may include at least one identifier of DRB to be setup. The DRB to be Modified List may include at least one identifier of DRB to be modified. The QoS Flow Indicator may identify a QoS Flow within a PDU Session. The QoS Flow Level QoS Parameters may define the QoS to be applied to a QoS flow or to a DRB. The QoS Flow Indicator may be defined as Table 2. The QoS Flow Level QoS Parameters may be defined as Table 3.

**[Table 2]**

| **IE**/Group Name | **Presence** | **Range** | **IE** type and reference | **Semantics description** |
|---|---|---|---|---|
| QoS Flow Indicator | M | | INTEGER (0 ..63) | |

**[Table 3]**

| **IE**/Group Name | **Presence** | **IE** type and reference | **Semantics description** |
|---|---|---|---|
| CHOICE QoS Characteristics | M | | |
| >Non-dynamic 5QI | | | |
| >>Non Dynamic 5QI Descriptor | M | | |
| >Dynamic 5QI | | | |
| >>Dynamic 5QI Descriptor | M | | |
| NG-RAN Allocation and Retention Priority | M | | |
| GBR QoS Flow Information | ○ | | This IE shall be present for GBR QoS Flows only. |
| Reflective QoS Attribute | O | ENUMERATE D (subject to, ..) | Details in TS 23.501 [20]. This IE applies to non-GBR flows only and shall be ignored otherwise. |
| Additional QoS Flow Information | O | ENUMERATE D (more likely, ..) | This IE indicates that traffic for this QoS flow is likely to appear more often than traffic for other flows established for the PDU session. |
| RDI | O | ENUMERATE D (enabled, ..) | Indicates whether Reflective QoS flow to DRB mapping should be applied. |

In step S1003, upon receipt of the bearer modification required message from the CU-UP, the CU-CP may transmit a UE context modification request message, an existing message or a new message to the DU for requesting the setup and/or L1/L2 reconfiguration of one or more DRBs based on the received DRB to be Setup List and/or the DRB to be Modified List.

In step S1004, on receiving the UE context modification request message from the CU-CP, the DU may establish the requested DRB(s) for the UE. The DU may allocate the required resource on radio interface for the DRB(s) requested to be established, and/or perform L1/L2 reconfiguration for the requested DRB(s). Then, the DU may respond with a UE context modification response message, an existing message or a new message to the CU-CP. The UE context modification response message may be transmitted to the CU-CP for indicating whether the requested DRB(s) is/are established or L1/L2 reconfiguration for the requested DRB(s) is performed.

In step S1005, when to receive the UE context modification response message from the DU, the CU-CP may send a bearer modification confirm message, an existing message or a new message to the CU-UP. The bearer modification confirm message may include a DRB Setup List and/or a DRB Modify List which has the DRB ID and/ or the DRB related QoS parameters.

In step S1006, when to decide to modify the QoS flow to DRB mapping rule, the CU-UP may send a bearer modification required message, an existing message or a new message to the CU-CP. The bearer modification required message may include a modified QoS flow to DRB mapping rule per a QoS flow or a modified QoS flow to DRB mapping rule per a DRB level. The bearer modification required message may include a reflective mapping indication informing the CU-CP whether or not the modified mapping rule to be provided by the CU-UP is related to reflective mapping. The reflective mapping indication may be delivered per a QoS flow or a DRB level.

In step S1007, upon receipt of the bearer modification required message from the CU-UP, the CU-CP may store the modified QoS flow to DRB mapping rule received from the CU-UP. Depending on the received reflective mapping indication for the QoS flow or the DRB, if the modified mapping rule is not related to reflective mapping, the CU-CP may prepare providing the UE with the modified mapping rule. The modified mapping rule may be provided to the UE through a RRC message. On the other hand, if the modified mapping rule is related to reflective mapping, the CU-CP does not provide the UE with the modified mapping rule.

In step S1008, the CU-CP may respond with a bearer modification confirm message, an existing message or a new message to the CU-UP. Alternatively, the bearer modification confirm message may be transmitted to the CU-UP after step S1012.

Referring to FIG. 10b, in step S1009, if, in step S1006, the modified mapping rule which has no relevance to reflective mapping has been received from the CU-UP, the CU-CP may send a DL RRC message transfer message to the DU. The DL RRC message transfer message may include a RRC reconfiguration message with the modified QoS flow to DRB mapping rule unrelated to reflective mapping.

In step S1010, on receiving the DL RRC message transfer message from the CU-CP, the DU may transmit to the UE the RRC reconfiguration message with the modified QoS flow to DRB mapping rule unrelated to reflective mapping.

In step S1011, the UE may send a RRC reconfiguration complete message to the DU.

In step S1012, when the DU has received from the radio interface the RRC reconfiguration complete message to be forwarded to the CU-CP, the DU may transmit to the CU-CP a UL RRC message transfer message including the RRC reconfiguration complete message.

According to an embodiment of the present invention, when the CU-UP decides to modify QoS flow to DRB mapping rule based on the current situation, e.g., downlink and/or uplink traffic on F1-U and/or NG-U, the CU-UP may inform the CU-CP about the modified QoS flow to DRB mapping rule. Further, the CU-UP may inform the CU-CP whether the modified QoS flow to DRB mapping rule is related to reflective mapping or not. If setup or modification for DRB(s) is necessary to modify the QoS flow to DRB mapping rule, the CU-UP may request establishment and/or L1/L2 reconfiguration of one or more DRBs to the CU-CP. Thus, according to an embodiment of the present invention, the CU-UP can modify the QoS flow to DRB mapping rule to use the radio resource which is suitable to current downlink and/or uplink traffic situation. Further, a user experience can be improved and a RAN node can handle the data packets better for a specific UE.

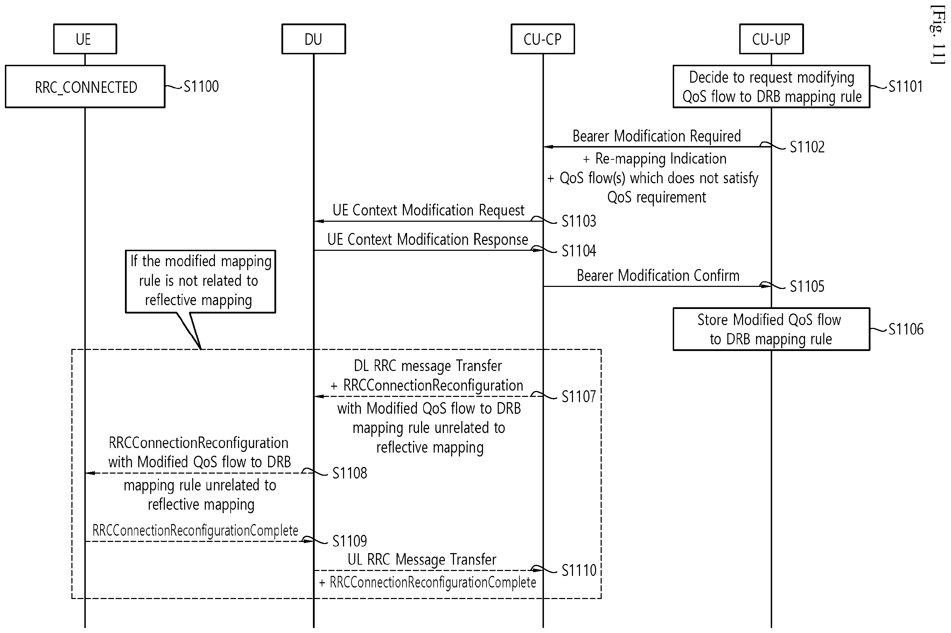

FIG. 11 shows a procedure for modifying a QoS flow to DRB mapping rule in a CP-UP separation case according to an embodiment of the present invention.

Referring to FIG. 11, in step S1100, the UE may be in RRC_CONNECTED mode.

In step S1101, the CU-UP may decide to request modifying a QoS flow to DRB mapping rule for one or more DRBs or QoS flows established to the CU-CP according to the current situation e.g. downlink and/or uplink traffic on F1-U and/or NG-U.

In step S1102, the CU-UP may send to the CU-CP a bearer modification required message, an existing message or a new message. The bearer modification required message may include a re-mapping indication and/or QoS flow(s) which does not satisfy QoS requirement. The QoS flow(s) may be an indication or information to request QoS flow to DRB re-mapping.

In step S1 103, upon receipt of the bearer modification required message from the CU-UP, the CU-CP may perform modifying the QoS flow to DRB mapping rule based on the received QoS flow(s). Then, the CU-CP may transmit a UE context modification request message, an existing message or a new message to the DU. The UE context modification request message may be transmitted for requesting the setup and/ or L1/L2 reconfiguration of one or more DRBs based on the modified QoS flow to DRB mapping rule.

In step S1104, on receiving the UE context modification request message from the CU-CP, the DU may establish the requested DRB(s) for the UE, and allocate the required resource on radio interface for the DRB(s) requested to be established, and/or perform L1/L2 reconfiguration for the requested DRB(s). Then, the DU may respond with a UE context modification response message, an existing message or a new message to the CU-CP. The UE context modification response message may be transmitted to the CU-CP for indicating whether the requested DRB(s) is/are established or L1/L2 reconfiguration for the requested DRB(s) is performed.

In step S1105, when to receive the UE context modification response message from the DU, the CU-CP may send to the CU-UP a bearer modification confirm message, an existing message, or a new message. The bearer modification confirm message may include the modified QoS flow to DRB mapping rule and/or the corresponding DRB configuration. Alternatively, the bearer modification confirm message may be transmitted to the CU-UP after the CU-CP receives the bearer modification required message in step S1102. That is, the bearer modification confirm message may be transmitted to the CU-UP after the CU-CP modifies the QoS flow to DRB mapping rule before transmitting the UE context modification request message in step S1103.

In step S1106, upon receipt of the bearer modification confirm message from the CU-CP, the CU-UP may store the modified QoS flow to DRB mapping rule. Then, the CU-UP may perform QoS flow to DRB mapping based on the received QoS flow to DRB mapping rule modified by the CU-CP.

In step S1107, if the modified mapping rule is not related to reflective mapping, the CU-CP may send a DL RRC message transfer message to the DU. The DL RRC message transfer message may include a RRC reconfiguration message with the modified QoS flow to DRB mapping rule unrelated to reflective mapping.

In step S1108, on receiving the DL RRC message transfer message from the CU-CP, the DU may transmit to the UE the RRC reconfiguration message with the modified QoS flow to DRB mapping rule unrelated to reflective mapping.

In step S1109, the UE may send a RRC reconfiguration complete message to the DU.

In step S1110, when the DU has received from the radio interface the RRC reconfiguration complete message to be forwarded to the CU-CP, the DU may transmit to the CU-CP a UL RRC message transfer message including the RRC reconfiguration complete message.

According to an embodiment of the present invention, the CU-CP can modify the QoS flow to DRB mapping rule based on the QoS flow(s) which does not satisfy QoS requirement indicated from the CU-UP. Thus, according to an embodiment of the present invention, a user experience can be improved and a RAN node can handle the data packets better for a specific UE.

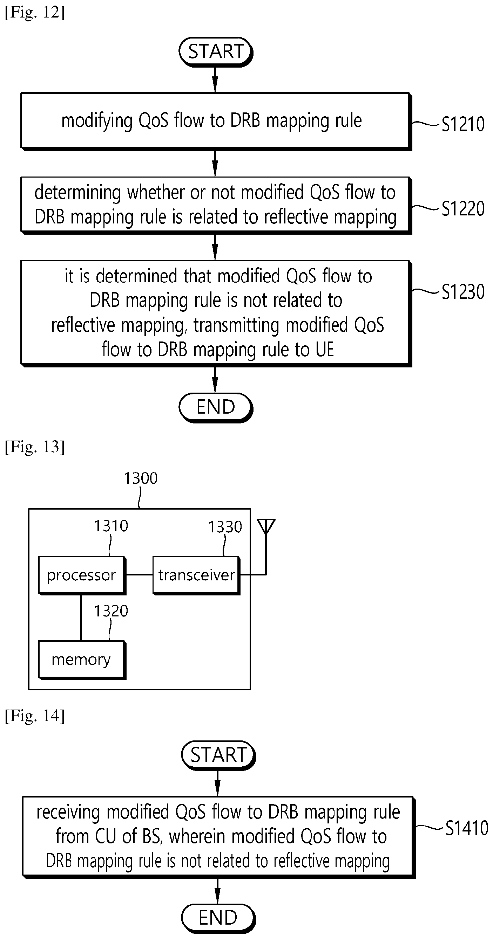

FIG. 12 shows a method for modifying a QoS flow to DRB mapping rule by a central unit (CU) of a base station (BS) according to an embodiment of the present invention. The present invention described above for BS side may be applied to this embodiment.

Referring to FIG. 12, in step S1210, the CU may modify the QoS flow to DRB mapping rule.

In step S1220, the CU may determine whether or not the modified QoS flow to DRB mapping rule is related to reflective mapping.

In step S1230, when it is determined that the modified QoS flow to DRB mapping rule is not related to the reflective mapping, the CU may transmit the modified QoS flow to DRB mapping rule to a user equipment (UE). Alternatively, when it is determined that the modified QoS flow to DRB mapping rule is related to the reflective mapping, the modified QoS flow to DRB mapping rule is not transmitted.

The CU may include a CU-CP and at least one CU-UP. The CU-CP may be a logical node hosting the RRC and the control plane part of the PDCP protocol of the CU, and the at least one CU-UP may be a logical node hosting the user plane part of the PDCP protocol and the SDAP protocol of the CU.

Information for modifying the QoS flow to DRB mapping rule may be transmitted from the at least one CU-UP to the CU-CP. The QoS flow to DRB mapping rule may be modified by the CU-CP based on the information. The modified QoS flow to DRB mapping rule may be transmitted from the CU-CP to the at least one CU-UP. The information may include at least one QoS flow which does not satisfy QoS requirement. The QoS flow to DRB mapping rule may be modified by the CU-CP based on the at least one QoS flow.

The modified QoS flow to DRB mapping rule may be transmitted to the UE via a distributed unit (DU) of the BS. The modified QoS flow to DRB mapping rule may be transmitted to the DU by being included in a DL RRC message transfer message. The modified QoS flow to DRB mapping rule may be transmitted to the UE by being included in a RRC reconfiguration message. The CU may be a logical node hosting RRC, SDAP and PDCP protocols of the BS, and the DU may be a logical node hosting RLC, MAC and PHY layers of the BS.

FIG. 13 shows a BS to implement an embodiment of the present invention. The present invention described above for BS side may be applied to this embodiment.

A BS 1300 includes a processor 1310, a memory 1320 and a transceiver 1330. The processor 1310 may be configured to implement proposed functions, procedures and/or methods described in this description. Layers of the radio interface protocol may be implemented in the processor 1310.

Specifically, the processor 1310 may modify the QoS flow to DRB mapping rule.

Further, the processor 1310 may determine whether or not the modified QoS flow to DRB mapping rule is related to reflective mapping.

Further, when it is determined that the modified QoS flow to DRB mapping rule is not related to the reflective mapping, the processor 1310 may control the transceiver 1330 to transmit the modified QoS flow to DRB mapping rule to the transceiver 1530. Alternatively, when it is determined that the modified QoS flow to DRB mapping rule is related to the reflective mapping, the modified QoS flow to DRB mapping rule is not transmitted.

The CU may include a CU-CP and at least one CU-UP. The CU-CP may be a logical node hosting the RRC and the control plane part of the PDCP protocol of the CU, and the at least one CU-UP may be a logical node hosting the user plane part of the PDCP protocol and the SDAP protocol of the CU.

Information for modifying the QoS flow to DRB mapping rule may be transmitted from the at least one CU-UP to the CU-CP. The QoS flow to DRB mapping rule may be modified by the CU-CP based on the information. The modified QoS flow to DRB mapping rule may be transmitted from the CU-CP to the at least one CU-UP. The information may include at least one QoS flow which does not satisfy QoS requirement. The QoS flow to DRB mapping rule may be modified by the CU-CP based on the at least one QoS flow.

The modified QoS flow to DRB mapping rule may be transmitted to the UE via a distributed unit (DU) of the BS. The modified QoS flow to DRB mapping rule may be transmitted to the DU by being included in a DL RRC message transfer message. The modified QoS flow to DRB mapping rule may be transmitted to the UE by being included in a RRC reconfiguration message. The CU may be a logical node hosting RRC, SDAP and PDCP protocols of the BS, and the DU may be a logical node hosting RLC, MAC and PHY layers of the BS.

The memory 1320 is operatively coupled with the processor 1310 and stores a variety of information to operate the processor 1310. The transceiver 1330 is operatively coupled with the processor 1310, and transmits and/or receives a radio signal.

FIG. 14 shows a method for receiving a modified QoS flow to DRB mapping rule by a UE according to an example not falling within the scope of the claimed invention. The present invention described above for UE side may be applied to this example not falling within the scope of the claimed invention.

Referring to FIG. 14, in step S1410, the UE may receive the modified QoS flow to DRB mapping rule from a central unit (CU) of a base station (BS). The modified QoS flow to DRB mapping rule may be not related to reflective mapping.

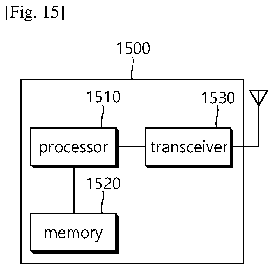

FIG. 15 shows a UE to implement an example not falling within the scope of the claimed invention. The
present invention described above for UE side may be applied to this example not falling within the scope of the claimed invention.

A UE 1500 includes a processor 1510, a memory 1520 and a transceiver 1530. The processor 1510 may be configured to implement proposed functions, procedures and/or methods described in this description. Layers of the radio interface protocol may be implemented in the processor 1510.

Specifically, the processor 1510 may control the transceiver 1530 to receive the modified QoS flow to DRB mapping rule from the transceiver 1330. The modified QoS flow to DRB mapping rule may be not related to reflective mapping.

The memory 1520 is operatively coupled with the processor 1510 and stores a variety of information to operate the processor 1510. The transceiver 1530 is operatively coupled with the processor 1510, and transmits and/or receives a radio signal.

The processor 1310, 1510 may include an application-specific integrated circuit (ASIC), a separate chipset, a logic circuit, and/or a data processing unit. The memory 1320, 1520 may include a read-only memory (ROM), a random access memory (RAM), a flash memory, a memory card, a storage medium, and/or other equivalent storage devices. The transceiver 1330, 1530 may include a base-band circuit for processing a wireless signal. When the example not falling within the scope of the claimed invention is implemented in software, the aforementioned methods can be implemented with a module (i.e., process, function, etc.) for performing the aforementioned functions. The module may be stored in the memory and may be performed by the processor 1310, 1510. The memory 1320, 1520 may be located inside or outside the processor 1310, 1510, and may be coupled to the processor 1310, 1510 by using various well-known means.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method for modifying, by a central unit, CU, of a base station, BS, a QoS flow to DRB mapping rule in a wireless communication system, the method comprising:
modifying the QoS flow to DRB mapping rule;
determining whether or not the modified QoS flow to DRB mapping rule is related to reflective mapping; and
based on the determination that the modified QoS flow to DRB mapping rule is not related to the reflective mapping, transmitting the modified QoS flow to DRB mapping rule to a user equipment, UE,
wherein the CU includes a central unit-control plane, CU-CP, and at least one central unit-user plane, CU-UP,
wherein the modified QoS flow to DRB mapping rule is transmitted from the CU-CP to the at least one CU-UP, and
wherein based on the determination that the modified QoS flow to DRB mapping rule is related to the reflective mapping, the modified QoS flow to DRB mapping rule is not transmitted to the UE.

2. The method of claim 1, wherein the CU-CP is a logical node hosting the RRC and the control plane part of the PDCP protocol of the CU, and
wherein the at least one CU-UP is a logical node hosting the user plane part of the PDCP protocol and the SDAP protocol of the CU.

3. The method of claim 1, wherein information for modifying the QoS flow to DRB mapping rule is transmitted from the at least one CU-UP to the CU-CP.

4. The method of claim 3, wherein the QoS flow to DRB mapping rule is modified by the CU-CP based on the information.

5. The method of claim 3, wherein the information includes at least one QoS flow which does not satisfy QoS requirement.

6. The method of claim 5, wherein the QoS flow to DRB mapping rule is modified by the CU-CP based on the at least one QoS flow.

7. The method of claim 1, wherein the modified QoS flow to DRB mapping rule is transmitted to the UE via a distributed unit, DU, of the BS.

8. The method of claim 7, wherein the modified QoS flow to DRB mapping rule is transmitted to the DU by being included in a DL RRC message transfer message.

9. The method of claim 7, wherein the modified QoS flow to DRB mapping rule is transmitted to the UE by being included in a RRC reconfiguration message.

10. A central unit, CU, of a base station, BS, for modifying a QoS flow to DRB mapping rule in a wireless communication system, the CU of BS comprising:
a transceiver;
at least one processor; and
at least one computer memory operably connectable to the at least one processor and storing instructions that, when executed, cause the at least one processor to perform operations comprising:
modifying the QoS flow to DRB mapping rule;
determining whether or not the modified QoS flow to DRB mapping rule is related to reflective mapping; and
based on the determination that the modified QoS flow to DRB mapping rule is not related to the reflective mapping, transmitting the modified QoS flow to DRB mapping rule to a user equipment, UE,
wherein the CU includes a central unit-control plane, CU-CP, and at least one central unit-user plane, CU-UP,
wherein the modified QoS flow to DRB mapping rule is transmitted from the CU-CP to the at least one CU-UP, and
wherein based on the determination that the modified QoS flow to DRB mapping rule is related to the reflective mapping, the modified QoS flow to DRB mapping rule is not transmitted to the UE.

## Patentansprüche

1. Verfahren zum Modifizieren, durch eine Zentraleinheit, CU, einer Basisstation, BS, einer QoS-Fluss-zu-DRB-Abbildungsregel in einem drahtlosen Kommunikationssystem, wobei das Verfahren umfasst:
Modifizieren der QoS-Fluss-zu-DRB-Abbildungsregel;
Bestimmen, ob die modifizierte QoS-Fluss-zu-DRB-Abbildungsregel mit einer reflektierenden Abbildung in Beziehung steht oder nicht; und
basierend auf der Bestimmung, dass die modifizierte QoS-Fluss-zu-DRB-Abbildungsregel nicht mit der reflektierenden Abbildung in Beziehung steht, Übertragen der modifizierten QoS-Fluss-zu-DRB-Abbildungsregel an ein Benutzergerät, UE,
wobei die CU eine Zentraleinheit-Steuerebene, CU-CP, und mindestens eine Zentraleinheit-Benutzerebene, CU-UP, enthält,
wobei die modifizierte QoS-Fluss-zu-DRB-Abbildungsregel von der CU-CP an die mindestens eine CU-UP übertragen wird, und
wobei basierend auf der Bestimmung, dass die modifizierte QoS-Fluss-zu-DRB-Abbildungsregel mit der reflektierenden Abbildung in Beziehung steht, die modifizierte QoS-Fluss-zu-DRB-Abbildungsregel nicht an das UE übertragen wird.

2. Verfahren nach Anspruch 1, wobei die CU-CP ein logischer Knoten ist, der den RRC und den Steuerebenenteil des PDCP-Protokolls der CU hostet, und
wobei die mindestens eine CU-UP ein logischer Knoten ist, der den Benutzerebenenteil des PDCP-Protokolls und das SDAP-Protokoll der CU hostet.

3. Verfahren nach Anspruch 1, wobei Informationen zum Modifizieren der QoS-Fluss-zu-DRB-Abbildungsregel von der mindestens einen CU-UP an die CU-CP übertragen werden.

4. Verfahren nach Anspruch 3, wobei die QoS-Fluss-zu-DRB-Abbildungsregel durch die CU-CP basierend auf den Informationen modifiziert wird.

5. Verfahren nach Anspruch 3, wobei die Informationen mindestens einen QoS-Fluss umfassen, der nicht QoS-Anforderung erfüllt.

6. Verfahren nach Anspruch 5, wobei die QoS-Fluss-zu-DRB-Abbildungsregel durch die CU-CP basierend auf dem mindestens einen QoS-Fluss modifiziert wird.

7. Verfahren nach Anspruch 1, wobei die modifizierte QoS-Fluss-zu-DRB-Abbildungsregel über eine verteilte Einheit, DU, der BS an das UE übertragen wird.

8. Verfahren nach Anspruch 7, wobei die modifizierte QoS-Fluss-zu-DRB-Abbildungsregel an die DU übertragen wird, indem sie in einer DL-RRC-Nachrichtenübertragungsnachricht enthalten ist.

9. Verfahren nach Anspruch 7, wobei die modifizierte QoS-Fluss-zu-DRB-Abbildungsregel an das UE übertragen wird, indem sie in einer RRC-Rekonfigurationsnachricht enthalten ist.

10. Zentraleinheit, CU, einer Basisstation, BS, zum Modifizieren einer QoS-Fluss-zu-DRB-Abbildungsregel in einem drahtlosen Kommunikationssystem, wobei die CU der BS umfasst:
einen Transceiver;
mindestens einen Prozessor; und
mindestens einen Computerspeicher, der betriebsfähig mit dem mindestens einen Prozessor verbindbar ist und Anweisungen speichert, die, wenn sie ausgeführt werden, den mindestens einen Prozessor veranlassen, Operationen auszuführen, die umfassen:
Modifizieren der QoS-Fluss-zu-DRB-Abbildungsregel;
Bestimmen, ob die modifizierte QoS-Fluss-zu-DRB-Abbildungsregel mit einer reflektierenden Abbildung in Beziehung steht oder nicht; und
basierend auf der Bestimmung, dass die modifizierte QoS-Fluss-zu-DRB-Abbildungsregel nicht mit der reflektierenden Abbildung in Beziehung steht, Übertragen der modifizierten QoS-Fluss-zu-DRB-Abbildungsregel an ein Benutzergerät, UE,
wobei die CU eine Zentraleinheit-Steuerebene, CU-CP, und mindestens eine Zentraleinheit-Benutzerebene, CU-UP, enthält,
wobei die modifizierte QoS-Fluss-zu-DRB-Abbildungsregel von der CU-CP an die mindestens eine CU-UP übertragen wird, und
wobei basierend auf der Bestimmung, dass die modifizierte QoS-Fluss-zu-DRB-Abbildungsregel mit der reflektierenden Abbildung in Beziehung steht, die modifizierte QoS-Fluss-zu-DRB-Abbildungsregel nicht an das UE übertragen wird.

## Revendications

1. Procédé de modification, par une unité centrale, CU, d'une station de base, BS, un flux QoS en règle de mappage DRB dans un système de communication sans fil, le procédé consistant à :
modifier le flux QoS en règle de mappage DRB ;
déterminer si le flux QoS modifié en règle de mappage DRB est ou non associé à un mappage réflectif ; et
en fonction de la détermination que le flux QoS modifié en règle de mappage DRB n'est pas associé à un mappage réflectif, transmettre le flux QoS modifié en règle de mappage DRB à un équipement utilisateur, UE,
la CU comprenant un plan de contrôle d'unité centrale, CU-UP, et au moins un plan d'utilisateur d'unité centrale, CU-UP,
le flux QoS modifié en règle de mappage DRB étant transmis à partir de la CU CP à ladite CU-UP, et
en fonction de la détermination que le flux QoS modifié en règle de mappage DRB est associé à un mappage réflectif, le flux QoS modifié en règle de mappage DRB n'étant pas transmis à l'UE.

2. Procédé selon la revendication 1, la CU-CP étant un nœud logique hébergeant la RRC et la partie de plan de contrôle du protocole PDCP de la CU, et
ladite CU-UP étant un nœud logique hébergeant la partie de plan d'utilisateur du protocole PDCP et du protocole SDAP de la CU.

3. Procédé selon la revendication 1, les informations pour modifier le flux QoS en règle de mappage DRB étant transmises à partir de ladite CU-UP à la CU-CP.

4. Procédé selon la revendication 3, le flux QoS en règle de mappage DRB étant modifié par la CU-UP sur la base des informations.

5. Procédé selon la revendication 3, les informations comprenant au moins un flux QoS qui ne remplit pas l'exigence QoS.

6. Procédé selon la revendication 5, le flux QoS en règle de mappage DRB étant modifié par la CU-CP en fonction dudit flux QoS.

7. Procédé selon la revendication 1, le flux QoS modifié en règle de mappage DRB étant transmis à l'UE par l'intermédiaire d'une unité distribuée, DU, de la BS.

8. Procédé selon la revendication 7, le flux QoS modifié en règle de mappage DRB étant transmis à la DU en étant inclus dans un message de transfert de message DL RRC.

9. Procédé selon la revendication 7, le flux QoS modifié en règle de mappage DRB étant transmis à l'UE en étant inclus dans un message de reconfiguration RRC.

10. Unité central, CU, d'une station de base, BS, pour modifier un flux QoS en une règle de mappage DRB dans un système de communication sans fil, la CU de la BS comprenant :
un émetteur-récepteur ;
au moins un processeur ; et
au moins une mémoire d'ordinateur connectée fonctionnellement audit processeur et mémorisant des instructions qui, lorsqu'elles sont exécutées, amènent ledit processeur à réaliser les opérations consistant à :
modifier le flux QoS en une règle de mappage DRB ;
déterminer si le flux QoS modifié en règle de mappage DRB est ou non associé à un mappage réflectif ; et
en fonction de la détermination que le flux QoS modifié en règle de mappage DRB n'est pas associé à un mappage réflectif, transmettre le flux QoS modifié en règle de mappage DRB à un équipement utilisateur, UE,
la CU comprenant un plan de contrôle d'unité centrale, CU-UP, et au moins un plan d'utilisateur d'unité centrale, CU-UP,
le flux QoS modifié en règle de mappage DRB étant transmis à partir de la CU CP à ladite CU-UP, et
en fonction de la détermination que le flux QoS modifié en règle de mappage DRB est associé à un mappage réflectif, le flux QoS modifié en règle de mappage DRB n'étant pas transmis à l'UE.
